# FASCICULE DE BREVET EUROPEEN

(11) **EP 1 372 990 B1**
(45) Date de publication et mention de la délivrance du brevet: **06.07.2005**
(21) Numéro de dépôt: 02704740.6
(22) Date de dépôt: 08.03.2002
(51) Int. Cl.: B60C 23/04

(54) **DISPOSITIF DE TRANSMISSION DE MESURES D'UN CAPTEUR VERS UNE UNITE CENTRALE**
VORRICHTUNG ZUR ÜBERTRAGUNG VON MESSUNGEN EINES SENSORS AUF EINE ZENTRALEINHEIT
DEVICE FOR TRANSMITTING MEASUREMENTS OF A SENSOR TO A CENTRAL UNIT

(30) Priorité: 04.04.2001 FR 0104589
(43) Date de publication de la demande: 02.01.2004
(73) Titulaire: Siemens VDO Automotive S.A.S., 31036 Toulouse Cédex 01 (FR); Siemens Aktiengesellschaft, 80333 München (DE)
(72) Inventeur: BIDOU, Patric, F-31830 Plaisance du Touch (FR); FONZES, Georges, F-06600 Antibes (FR); GOESER, Gerhard, Bloomfield Hill, MI 48301 (DE)
(86) Numéro de dépôt international: PCT/EP2002/002547
(87) Numéro de publication internationale: WO 2002/081237

(56) Documents cités:
- DE-A- 4 303 591
- DE-A- 19 856 860

## Description

La présente invention concerne un procédé de transmission de mesures d'un capteur vers une unité centrale. Ce procédé concerne plus particulièrement la transmission de mesures, notamment de pressions et de températures, d'un capteur situé dans un pneumatique d'une roue de véhicule automobile vers une unité centrale de contrôle placée à bord du véhicule.

Pour vérifier la pression dans un pneu de véhicule, notamment un véhicule automobile, il est connu de placer un capteur dans le pneumatique correspondant. Ce capteur mesure alors la pression, éventuellement la température, et grâce à un émetteur radio incorporé, transmet ces informations à une unité centrale placée à bord du véhicule (voir par exemple DE-A-198 56 860).

Le capteur ainsi disposé dans le pneumatique est équipé d'une pile pour l'alimentation en énergie électrique du capteur et de l'émetteur. Afin d'économiser cette pile, lorsque le véhicule est à l'arrêt, le capteur continue de travailler normalement mais à une fréquence moins élevée. II peut parfois arriver que lors d'un arrêt le capteur se trouve dans une zone d'ombre de transmission radio et ne puisse transmettre les informations qu'il mesure vers l'unité centrale. Si le véhicule reste alors longtemps à l'arrêt, entre deux mesures successives transmises à l'unité centrale, la différence de pression pourra apparaître comme étant importante. Une alarme sera déclenchée pour avertir le conducteur alors qu'il peut très bien s'agir d'une variation de pression tout à fait normale due par exemple à un changement de température et/ou un réajustement de pression effectué par l'utilisateur.

La présente invention a alors pour but de fournir un procédé de transmission de mesure vers l'unité centrale plus fiable que les dispositifs de l'art antérieur. De préférence, ce procédé permettra un fonctionnement du capteur permettant d'économiser l'énergie de la pile et ne mettra pas en oeuvre de dispositif plus onéreux que les dispositifs actuels utilisés pour la surveillance de la pression de pneus.

A cet effet, le procédé qu'elle propose est un procédé de transmission de mesures d'un capteur vers une unité centrale par une liaison sans fil, telle par exemple une liaison radio, dans un véhicule automobile ou similaire.

Selon l'invention, ce procédé comporte les étapes suivantes :
- détection de l'état arrêté du véhicule,
- mesure par le capteur d'un paramètre tel par exemple la pression,
- mémorisation du résultat de la mesure au sein du capteur,
- analyse au niveau du capteur de la mesure en fonction des précédentes mesures,
- mémorisation des résultats significatifs de l'analyse au sein du capteur, et
- lorsque le véhicule roule à nouveau, transmission par le capteur à l'unité centrale le cas échéant de données significatives des évènements survenus depuis le dernier arrêt détecté du véhicule.

Ainsi le système comportant le capteur et l'émetteur disposés par exemple dans le pneumatique du véhicule ne se limite pas à mesurer et à envoyer les résultats de la mesure vers l'unité centrale mais est capable de faire un historique et une analyse de l'évolution des valeurs mesurées afin de déterminer de façon autonome des phénomènes importants à détecter à l'arrêt du véhicule. Il devient alors possible de détecter un phénomène à évolution lente d'un phénomène à évolution rapide.

Pour garantir une bonne transmission des informations mémorisées par le capteur, une pluralité de transmissions sont de préférence effectuées par le capteur vers l'unité centrale lorsqu'un démarrage du véhicule est détecté.

Les mesures faites par le capteur à l'arrêt du véhicule se font par exemple à une fréquence prédéterminée. Celle-ci est de préférence moins élevée quand le véhicule est à l'arrêt que lorsqu'il roule afin d'économiser l'énergie nécessaire pour le fonctionnement du capteur et de l'émetteur.

Avantageusement, le capteur, lorsque le véhicule redémarre, ne transmet à l'unité centrale que des informations concernant une variation brusque et/ou anormale du paramètre mesuré. L'analyse des valeurs mesurées ayant déjà été effectuée, il est inutile de donner toutes ces valeurs à l'unité centrale.

Dans le procédé selon l'invention, le capteur mesure par exemple à la fois une pression et une température.

Au cours de l'analyse des mesures effectuées, le capteur peut calculer la dérivée par rapport au temps du paramètre mesuré.

Pour pouvoir donner une information datée à un utilisateur, le capteur mémorise avantageusement à la fois les mesures effectuées et la date à laquelle elles ont été effectuées.

La détection du mouvement et/ou de l'arrêt du véhicule est par exemple réalisée par un accéléromètre.

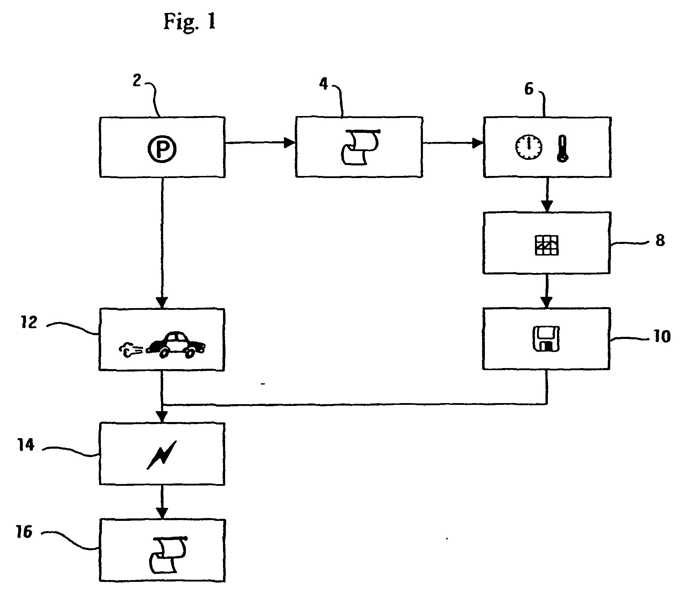

L'unique figure représente un organigramme illustrant un procédé selon l'invention.

Un procédé selon l'invention concerne un véhicule muni d'un dispositif pour surveiller la pression des pneus. Un tel dispositif comporte généralement au niveau de chaque pneumatique du véhicule un capteur permettant de mesurer généralement la pression et la température associé à un émetteur. Généralement, ce dernier émet des ondes électromagnétiques dans le domaine des radiofréquences (RF). Le capteur et l'émetteur sont par exemple placés à proximité de la valve de la roue correspondante. Un récepteur correspondant à l'émetteur est quant à lui associé à une unité centrale de contrôle disposée dans le véhicule.

Au niveau de chaque capteur, se trouve un dispositif, tel par exemple un accéléromètre, pour indiquer si le véhicule est à l'arrêt ou roule. Des moyens électroniques de commande et de gestion intégrés par exemple au capteur déterminent, en fonction de l'état roulant ou arrêté du véhicule, la fréquence de mesure des pression et température ainsi que l'émission des mesures effectuées vers l'unité centrale. Lorsque le véhicule est à l'arrêt, la fréquence pour mesurer la pression et la température est moins élevée que lorsque le véhicule roule. Le procédé selon l'invention concerne plus particulièrement la gestion des mesures et de la transmission des informations vers l'unité centrale durant les phases où le véhicule est à l'arrêt.

Lorsqu'un accéléromètre, ou dispositif similaire, détecte qu'une roue est à l'arrêt (case 2) le dispositif de gestion et de commande associé au capteur de cette roue lance le programme associé à la procédure de gestion du capteur et de son émetteur pour un véhicule à l'arrêt (case 4).

Selon cette procédure, le capteur mesure à fréquence prédéterminée, par exemple toutes les minutes, la température et la pression environnantes (case 6). Le résultat de ces mesures est alors analysé (case 8) en fonction des résultats des mesures précédentes qui ont été stockés dans une mémoire électronique. Cette dernière se trouve au niveau du capteur et est par exemple intégrée au dispositif de gestion et de commande du capteur. Cette analyse consiste par exemple à déterminer la variation de pression entre deux mesures successives, à calculer la dérivée par rapport au temps de la pression et de la température et enfin vérifier que les valeurs ainsi calculées restent dans des limites acceptables prédéterminées.

Les résultats des mesures effectuées ainsi que les résultats de l'analyse sont mémorisés (case 10).

Ce processus se poursuit à fréquence prédéterminée tant que le véhicule est à l'arrêt. Pour ne pas saturer la mémoire, il est par exemple possible de ne garder en mémoire que les n dernières mesures de température et de pression ainsi que par exemple la dernière mesure de température et de pression faite avant l'arrêt du véhicule. De même, tous les résultats des analyses des mesures ne sont pas forcément gardés en mémoire. Ne sont alors gardés en mémoire que des résultats "intéressants" c'est-à-dire pour lesquels la variation de pression a été importante ou brusque. On peut éventuellement associer à ces résultats gardés en mémoire la date de leur acquisition.

L'accéléromètre, ou similaire, est toujours en veille et détecte un redémarrage du véhicule. Lorsqu'un tel redémarrage est détecté (case 12) les informations qui ont été mémorisées lors de l'arrêt du véhicule qui s'achève sont transmises à plusieurs reprises à l'unité centrale placée à bord du véhicule. La transmission est assez fréquente pour garantir que toutes les données soient bien transmises à l'unité centrale (case 14). L'unité centrale remarque rapidement si une variation de pression suspecte a été détectée pendant l'arrêt du véhicule. En effet, comme les résultats des mesures ont déjà été analysés par le capteur pendant l'arrêt du véhicule, le résultat de la surveillance de l'état du pneu correspondant est tout de suite disponible. Si aucune variation anormale n'a été détectée on peut même prévoir qu'alors aucune émission n'est faite vers l'unité centrale. Une émission est uniquement faite si une alarme doit être déclenchée.

Par la suite, durant la phase de roulage, le processus de gestion et de commande du capteur et de l'émetteur est réalisé selon un procédé prédéterminé (case 16). Ce processus n'est pas décrit en détail ici. II peut par exemple consister à réaliser à intervalles de temps réguliers, par exemple, toutes les trente secondes, des mesures et à transmette le résultat de celles-ci à l'unité centrale placée à bord du véhicule qui analyse alors ces données et déclenche le cas échéant une alarme.

Selon le procédé décrit ci-dessus, le système situé dans le pneumatique et destiné à mesurer la température et la pression à l'intérieur de celui-ci est capable de faire un historique et une analyse de l'évolution des paramètres mesurés afin de déterminer de façon autonome des phénomènes importants à détecter à l'arrêt tel qu'un réajustement de pression ou une fuite importante. Ainsi, même si ce système se trouve momentanément incapable de transmettre les résultats de ses mesures à l'unité centrale pour une raison quelconque (émetteur positionné par exemple dans une zone d'ombre RF) des données pertinentes seront transmises dès la mise en mouvement du véhicule.

Le procédé décrit ci-dessus présente l'avantage de pouvoir être mis en oeuvre avec les capteurs et émetteurs actuellement mis en oeuvre pour les systèmes de surveillance de la pression des pneus. Aucun surcoût en matériel n'est donc nécessaire pour adapter l'invention à un véhicule équipé d'un tel système.

Le procédé selon l'invention permet au dispositif de surveillance de la pression des pneus de faire la distinction entre une variation rapide et une évolution lente de la pression. II distingue ainsi une évolution lente due par exemple à une variation de température d'une variation rapide mais aussi un réajustement de pression suivi d'une évolution lente dans le sens opposé au réajustement d'une pression maintenue quasi constante.

L'invention ne se limite pas à la forme de réalisation du procédé décrite ci-dessus à titre d'exemple non limitatif. Elle concerne également toutes les variantes de réalisation dans le cadre des revendications ci-après.

## Revendications

1. Procédé de transmission de mesures d'un capteur vers une unité centrale par une liaison sans fil, telle par exemple une liaison radio, dans un véhicule automobile ou similaire, **caractérisé en ce qu'**il comporte les étapes suivantes :
- détection de l'état arrêté du véhicule (2),
- mesure par le capteur d'un paramètre tel par exemple la pression (6),
- mémorisation du résultat de la mesure au sein du capteur (10),
- analyse au niveau du capteur de la mesure en fonction des précédentes mesures (8),
- mémorisation des résultats significatifs de l'analyse au sein du capteur (10), et
- lorsque le véhicule roule à nouveau, transmission (14) par le capteur à l'unité centrale le cas échéant de données significatives des évènements survenus depuis le dernier arrêt détecté du véhicule.

2. Procédé selon la revendication 1, **caractérisé en ce qu'**une pluralité de transmissions (14) sont effectuées par le capteur vers l'unité centrale lorsqu'un démarrage du véhicule est détecté.

3. Procédé selon l'une des revendications 1 ou 2, **caractérisé en ce que** les mesures faites par le capteur à l'arrêt du véhicule se font à une fréquence prédéterminée.

4. Procédé selon la revendication 3, **caractérisé en ce que** la fréquence des mesures est moins élevée quand le véhicule est à l'arrêt que lorsqu'il roule.

5. Procédé selon l'une des revendications 1 à 4, **caractérisé en ce que** le capteur, lorsque le véhicule redémarre, ne transmet à l'unité centrale que des informations concernant une variation brusque et/ou anormale du paramètre mesuré.

6. Procédé selon l'une des revendications 1 à 5, **caractérisé en ce que** le capteur mesure à la fois une pression et une température.

7. Procédé selon l'une des revendications 1 à 6, **caractérisé en ce qu'**au cours de l'analyse des mesures effectuées, le capteur calcule la dérivée par rapport au temps du paramètre mesuré.

8. Procédé selon l'une des revendications 1 à 7, **caractérisé en ce que** le capteur mémorise à la fois les mesures effectuées et la date à laquelle elles ont été effectuées.

9. Procédé selon l'une des revendications 1 à 8, **caractérisé en ce que** la détection du mouvement et/ou de l'arrêt du véhicule est réalisée par un accéléromètre.

10. Application du procédé selon l'une des revendications 1 à 9 à un système de surveillance de la pression des pneus d'un véhicule automobile.

## Patentansprüche

1. Verfahren zur Übertragung von Messungen eines Sensors an eine Zentraleinheit über eine drahtlose Verbindung, wie zum Beispiel eine Funkverbindung, in einem Kraftfahrzeug oder ähnlichem, **dadurch gekennzeichnet, dass** es die folgenden Schritte umfasst:
- Erfassen des stehenden Zustands des Fahrzeugs (2),
- Messen eines Parameters wie zum Beispiel des Drucks durch den Sensor (6),
- Speichern des Ergebnisses der Messung innerhalb des Sensors (10),
- Analyse der Messung auf Ebene des Sensors in Abhängigkeit von den vorigen Messungen (8),
- Speichern der bedeutsamen Ergebnisse der Analyse innerhalb des Sensors (10), und
- wenn das Fahrzeug wieder fährt, gegebenenfalls Übertragen (14) bedeutsamer Daten der Ereignisse, die seit dem letzten Stand des Fahrzeugs aufgetreten sind, durch den Sensor an die Zentraleinheit.

2. Verfahren nach Anspruch 1, **dadurch gekennzeichnet, dass** mehrere Übertragungen (14) an die Zentraleinheit durch den Sensor vorgenommen werden, wenn ein Anfahren des Fahrzeugs erfasst wird.

3. Verfahren nach einem der Ansprüche 1 oder 2, **dadurch gekennzeichnet, dass** die Messungen, die von dem Sensor beim Stehen des Fahrzeugs vorgenommen werden, mit einer vorbestimmten Häufigkeit erfolgen.

4. Verfahren nach Anspruch 3, **dadurch gekennzeichnet, dass** die Häufigkeit der Messungen geringer ist, wenn das Fahrzeug steht, als wenn es fährt.

5. Verfahren nach einem der Ansprüche 1 bis 4, **dadurch gekennzeichnet, dass** der Sensor, wenn das Fahrzeug wieder anfährt, an die Zentraleinheit nur Informationen überträgt, die eine plötzliche und / oder unnormale Veränderung des gemessenen Parameters betrifft.

6. Verfahren nach einem der Ansprüche 1 bis 5, **dadurch gekennzeichnet, dass** der Sensor gleichzeitig einen Druck und eine Temperatur misst.

7. Verfahren nach einem der Ansprüche 1 bis 6, **dadurch gekennzeichnet, dass** im Laufe der Analyse der vorgenommenen Messungen der Sensor die Ableitung des gemessenen Parameters nach der Zeit berechnet.

8. Verfahren nach einem der Anspruche 1 bis 7, **dadurch gekennzeichnet, dass** der Sensor gleichzeitig die vorgenommenen Messungen und das Datum speichert, an dem sie vorgenommen worden sind.

9. Verfahren nach einem der Ansprüche 1 bis 8, **dadurch gekennzeichnet, dass** das Erfassen der Bewegung und / oder des Stehens des Fahrzeugs durch einen Beschleunigungsmesser vorgenommen wird.

10. Anwenden des Verfahrens nach einem der Ansprüche 1 bis 9 auf ein Überwachungssystem für den Druck der Reifen eines Kraftfahrzeugs.

## Claims

1. Method for transmitting measurements from a sensor to a central unit via a wireless link, such as, for example, a radio link, in a motor vehicle or similar, **characterised in that** it comprises the following stages:
- detection of stationary state of the vehicle (2),
- measurement by the sensor of a parameter, for example pressure (6),
- storage in memory within the sensor of the result of the measurement (10),
- analysis by the sensor of the measurement in relation to previous measurements (8),
- storage within the sensor of any significant results of the analysis (10), and
- when the vehicle starts to move again, transmission (14) from the sensor to the central unit if necessary of any significant data relating to events occurring since the last time a stationary state was detected.

2. Method according to Claim 1, **characterised in that** a number of successive transmissions (14) are made by the sensor to the central unit when it detects that the vehicle starts moving again.

3. Method according to Claim 1 or 2, **characterised in that** the measurements taken by the sensor when the vehicle is stationary are carried out at predetermined intervals.

4. Method according to Claim 3, **characterised in that** the interval between measurements is longer when the vehicle is stationary than when it is moving.

5. Method according to any one of Claims 1 to 4, **characterised in that**, when the vehicle starts moving again, the sensor transmits to the central unit only data relating to an abrupt and/or abnormal change in the parameter measured.

6. Method according to any one of Claims 1 to 5, **characterised in that** the sensor simultaneously measures pressure and temperature.

7. Method according to any one of Claims 1 to 6, **characterised in that**, during the analysis of measurements taken, the sensor calculates the product in relation to the time of the parameter measured.

8. Method according to any one of Claims 1 to 7, **characterised in that** the sensor stores the measurements taken and the date on which they were taken.

9. Method according to any one of Claims 1 to 8, **characterised in that** the detection of movement or stationary state is carried out by an accelerometer.

10. Application of the method according to any one of Claims 1 to 9 to a system for monitoring tyre pressure of a motor vehicle.
